# EUROPÄISCHE PATENTSCHRIFT

(11) **EP 1 207 134 B1**
(45) Veröffentlichungstag und Bekanntmachung des Hinweises auf die Patenterteilung: **16.01.2008**
(21) Anmeldenummer: 01126088.2
(22) Anmeldetag: 02.11.2001
(51) Int. Cl.: C01B 3/38, C01B 3/32, B01B 1/00, B01J 8/02, B01J 8/04, H01M 8/06

(54) **Gaserzeugungssystem für einen Reformer**
Gas generating system for a reformer
Système de génération de gaz pour un dispositif de reformage

(30) Priorität: 17.11.2000 DE 10057018
(43) Veröffentlichungstag der Anmeldung: 22.05.2002
(73) Patentinhaber: NuCellSys GmbH, 73230 Kirchheim/Teck-Nabern (DE)
(72) Erfinder: Motzet, Bruno, 73235 Weilheim/Teck (DE); Tischler, Alois, 84405 Dorfen (DE)
(74) Vertreter: Finkele, Rolf

(56) Entgegenhaltungen:
- EP-A- 0 861 802
- EP-A- 0 921 584
- US-A- 4 946 667
- US-A- 4 994 331

## Beschreibung

Die Erfindung betrifft ein Gaserzeugungssystem zur Bereitstellung eines einem Reformer zuzuführenden Gasstroms, der zumindest eine Kohlenstoffverbindung, wie Kohlenwasserstoff oder Alkohol, und Wasserdampf enthält, wobei ein Verdampfer zur Verdampfung wenigstens einer der dem Reformer zuzuführenden Komponenten vorgesehen ist. Die Erfindung betrifft weiterhin ein entsprechendes Verfahren zur Bereitstellung eines Gasstroms für einen Reformer.

Eine gattungsgemäße Anlage zur Wasserdampfreformierung eines Kohlenwasserstoffes, die einen Verdampfer, eine dem Verdampfer nachgeschaltete Vorreformierungseinrichtung, einen Hauptreformer, eine CO-Entfernungseinheit sowie zwei katalytischer Brenner umfasst, ist aus der EP 0 921 584 A2 bekannt. Die Vorreformierungstufe dient hierbei dazu die Edukte bereits teilweise umzusetzen bevor sie in den Hauptreformer gelangen, mit den Ziel den Umsatz zu erhöhen. Allerdings kann bei dieser Gaserzeugungsvorrichtung die Vorreformierungstufe auch als eine Normalisierungsstufe zur Vergleichmäßigung der Temperatur am Eintritt in den Reformer verstanden werden.

Die EP 0 861 802 A2 beschreibt eine Anlage und ein Verfahren zur Wasserdampfreformierung mit einem Verdampfer, einem Dampfüberhitzer (Superheater), einem Reformer einem Shift-Reaktor, einem CO-Oxidator sowie einem katalytischen Brenner. Der Superheater dient hierbei dazu, das dem Reformer zugeführte Gemisch weiter zu erwärmen und zu Überhitzen. Damit wird natürlich auch die Temperatur am Eintritt in den Reformer beeinflusst.

Ein derartiges Gaserzeugungssystem wird beispielsweise zur Versorgung von Brennstoffzellensystemen mit Wasserstoff als Brennstoff eingesetzt. Kohlenwasserstoffe oder Alkohole wie Methanol werden gasförmig zusammen mit Wasserdampf dem Reformer zugeführt, in dem eine katalytische Umsetzung zu einem Reformat stattfindet, das im wesentlichen Wasserstoff, Kohlendioxid, Wasser(dampf) und Kohlenmonoxid enthält. Der im Reformat enthaltene Wasserstoff wird als Brennstoff zum Betrieb des Brennstoffzellensystems genutzt. Derartige Brennstoffzellensysteme werden beispielsweise in Kraftfahrzeugen mit elektromotorischem Antrieb verwendet.

Ein aus der US 5,344,721 bekanntes Gaserzeugungssystem für einen Dampfreformer mit nachgeschaltetem Brennstoffzellensystem verdampft die dem Reformer zuzuführenden Komponenten in mehreren Schritten. Wasser wird zunächst über den Kühlkreislauf der Brennstoffzelle vorgeheizt, dann über Wärmetausch mit dem aus dem Reformer austretenden heißen Reformat zum Teil verdampft, um anschließend über Wärmetausch mit dem den Reformer beheizenden Brenner vollständig verdampft zu werden. Zur Verdampfung des benötigten Alkohols genügt der Wärmetausch mit dem Kühlkreislauf der Brennstoffzelle.

In gleicher Weise werden in der US 4,994,331 Brennstoff und Wasser über Wärmetausch mit dem Brennstoffzellenkühler und dem Reformatstrom verdampft.

Aus der US 4,976,747 ist zusätzlich noch die Verdampfung von Brennstoff durch Wärmetausch mit umgesetztem heißen Brennstoffzellenabgas bekannt.

Bei den geschilderten Verfahren zur Verdampfung der dem Reformer zuzuführenden Komponenten wird dem Umstand von Lastwechseln nicht Rechnung getragen. Die Lebensdauer der Reformerkatalysatoren ist unter anderem abhängig von den Eintrittsbedingungen der Komponenten (Edukte). Sind die Eintrittsbedingungen nicht konstant, sondern streuen bei Lastwechsel über einen großen Temperaturbereich, reduziert sich die Lebenserwartung der Reformerkatalysatoren deutlich. Ferner müssen für diesen Fall die nachfolgenden Komponenten wie die Gasreinigung (Shift- und selektive Oxidationsstufen) auf den schlechtesten Betriebszustand hin ausgelegt werden, woraus große Baugrößen, hohes Gewicht und hohe Fertigungskosten resultieren. Bei Lastwechseln schwankt aufgrund der zeitlichen Verzögerung von zu verdampfenden Komponenten und der hierzu notwendigen, zur Verfügung stehenden Wärmemenge des Heizmittels der Dampfzustand (Dampftemperatur) unter Umständen erheblich. Es hat sich gezeigt, dass dies die Lebenserwartung der Reformerkatalysatoren stark herabsetzt.

Aufgabe vorliegender Erfindung ist daher, ein verbessertes Gaserzeugungssystem sowie ein Verfahren zur Bereitstellung eines einem Reformer zuzuführenden Gasstroms anzugeben, durch die einer durch Lastschwankungen bedingten Herabsetzung der Lebensdauer von Reformerkatalysatoren wirksam begegnet werden kann.

Diese Aufgabe wird erfindungsgemäß durch ein Gaserzeugungssystem gemäß den Ansprüchen 1 und 2 sowie durch ein Verfahren gemäß den Ansprüchen 4 und 5 gelöst. Vorteilhafte Ausgestaltungen ergeben sich aus den jeweiligen Unteransprüchen und der nachfolgenden Beschreibung.

Gemäß vorliegender Erfindung ist zwischen Verdampfer und Reformer eine Normalisierungsstufe zur Vergleichmäßigung der Temperaturverteilung in dem dem Reformer zuzuführenden Gasstrom geschaltet, wobei die Normalisierungsstufe eine Vergleichmäßigung der zeitlich auftretenden Temperatursenken und -peaks gewährleistet. Hierzu wird erfindungsgemäß die Temperatur des Gasstroms auf einen Temperaturbereich, der unterhalb der maximal zulässigen Reformereintrittstemperatur liegt, vergleichmäßigt. Hierdurch ist auch bei Lastwechsel garantiert, dass die hohen Temperaturschwankungen der verdampften Komponenten vor Eintritt in den Reformer ausgeglichen werden.

Die Vergleichmäßigung des Temperaturprofils des dem Reformer zugeleiteten Gasstroms lässt sich gemäß der Erfindung mit unterschiedlichen Mitteln erreichen. So kann als Normalisierungsstufe gemäß Anspruch 1 eine adiabate Stufe vorgesehen sein, in der Brennstoff und Luft adiabatisch katalytisch umgesetzt werden. Die adiabate Stufe heizt sich hierbei aufgrund der exothermen Umsetzung auf. Die Temperatur des die adiabate Stufe verlassenden Gasstroms muss unterhalb der maximalen Reformereintrittstemperatur liegen, wozu die Luftdosierung zur adiabaten Stufe temperaturabhängig geregelt wird. Um den verbrauchten Brennstoff zu ersetzen, kann zusätzlicher Brennstoff von außen zugeführt werden. Durch diese Brennstoffdosierung in den zu reformierenden Gasstrom kann eine zusätzliche Brennstoffdosierung in den katalytischen Brenner der Sekundärseite entfallen, wodurch geringere Emissionen auftreten.

Als weitere erfindungsgemäße Normalisierungsstufe ist gemäß Anspruch 2 ein katalytischer beheizter Reaktor geeignet, der eine Primärseite aufweist, durch die der Gasstrom zum Reformer geleitet wird, sowie eine Sekundärseite, die zur Beheizung des Gasstroms dient. In der Sekundärseite des katalytischen Reaktors wird ein Brenngas mit Luft katalytisch umgesetzt, wobei auch hier wie bei der oben beschrieben adiabaten Stufe eine temperaturabhängige Regelung der Brenngas-/Luftdosierung erfolgen kann. Hierzu wird ein Temperatursensor in der Auslassleitung der Primärseite des katalytischen Reaktors vorgesehen, der mit einer Regelungseinheit verbunden ist, die das Ventil zur Zuführung des Brenngas-Luftgemischs ansteuert. Auch hier lässt sich als Brenngas zu reformierendes Gas oder Wasserstoff, beispielsweise aus dem Brennstoffzellenabgas, einsetzen Erfindungsgemäß erfolgt eine Regelung der Temperatur durch eine Regelung der der Normalisierungstufe zugeführten Luft- und/oder Brennstoffmenge.

Durch die Erfindung wird die Lebensdauer der Reformerkatalysatoren erhöht. Gleichzeitig kann die Dynamik des Reformerprozesses erhöht werden, ohne die Lebenserwartung des Reformerkatalysators zu reduzieren. Dies erlaubt einen dynamischeren Betrieb bei verlängerten Wartungsintervallen.

Bei einem aus mehreren Verdampferstufen bestehenden Verdampfer, wie aus dem einleitend beschriebenen Stand der Technik bekannt, ist es zweckmäßig, die erfindungsgemäße Normalisierungsstufe hinter die letzte Verdampferstufe vor den Reformer zu schalten. Falls notwendig können auch zusätzliche Normalisierungsstufen zwischen den Verdampferstufen zwischengeschaltet sein.

Im folgenden soll die Erfindung anhand von durch die beigefügten Zeichnungen illustrierten Ausführungsbeispielen näher erläutert werden.
- Fig. 1: zeigt ein erfindungsgemäßes Gaserzeugungssystem in stark schematisierter Form mit einer zwischen Verdampfer und Reformer geschalteten adiabaten Stufe.
- Fig. 2: zeigt ein weiteres erfindungsgemäßes Gaserzeugungssystem mit zwischen Verdampfer und Reformer zwischengeschaltetem katalytisch beheizten Reaktor.

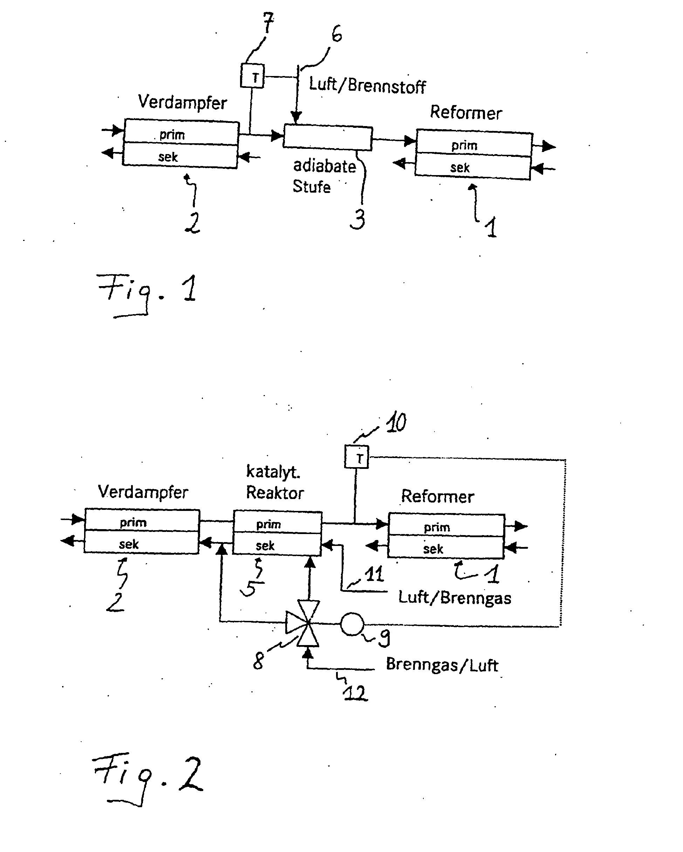

Das Gaserzeugungssystem gemäß Fig. 1 weist einen Reformer 1 auf, der durch Reformierung einer Kohlenstoffverbindung, in diesem Beispiel Methanol, in bekannter Weise ein wasserstoffhaltiges Reformat erzeugt. Der zu reformierende Gasstrom, der neben Methanol Wasser enthält, wird der Primärseite des Reformers zugeführt. Der Reformer wird über seine Sekundärseite beheizt, um die erforderliche Katalysatortemperatur aufrecht zu erhalten. Die Reformerbeheizung kann mittels eines katalytischen Brenners vorgenommen werden, der im Brennstoffzellenabgas enthaltenden Wasserstoff exotherm umsetzt. Der Brenner kann auch mit Methanol oder einem anderen Brennstoff betrieben werden.

In der Primärseite des Verdampfers 2 werden die dem Reformer zuzuführenden Komponenten, in diesem Beispiel Methanol und Wasser, verdampft. Die Komponenten können beispielsweise in einem bestimmten Mischungsverhältnis gemischt und anschließend dem Verdampfer 2 zugeführt werden. Es ist auch denkbar, die Verdampfung in mehreren Stufen auszuführen, wobei für die einzelnen Komponenten unterschiedlicher Siedepunkte jeweils eine unterschiedliche Anzahl Verdampferstufen vorgesehen sein kann. Vorzugsweise befindet sich in diesem Fall die Normalisierungsstufe, hier die adiabate Stufe 3, hinter der letzten Verdampferstufe.

Der adiabaten Stufe 3 wird über eine Zufuhrleitung 6 Luft zugeführt, um den Brennstoff katalytisch mit Luftsauerstoff umzusetzen. Die bei dieser Reaktion freiwerdende Wärme führt zur Erwärmung der adibaten Stufe und somit des durch diese geführten Gasstroms. Als Brennstoff kann beispielsweise Methanol verwendet werden, wobei vorteilhafterweise der in der adiabaten Stufe umgesetzte Brennstoff durch Zuführung von Methanol ersetzt wird. Selbstverständlich kann die adiabate Stufe auch mit einem anderen Brennstoff betrieben werden.

Das Zwischenschalten der adiabaten Stufe 3 führt erfindungsgemäß zu einer Vergleichmäßigung des zeitlichen Temperaturverlaufs des dem Reformer zuzuführenden Gasstroms, wobei darauf zu achten ist, dass die maximale Eintrittstemperatur des Reformers 1 nicht überschritten wird. Hierzu ist es sinnvoll, eine temperaturabhängige Regelung der über die Leitung 6 zugeführten Luft- und/oder Brennstoffmenge vorzusehen. Hierzu ist ein Temperatursensor 7 angeordnet, der die Temperatur auf der Einlassseite der adiabaten Stufe 3 misst und ein entsprechendes Signal an eine (nicht dargestellte) Regeleinheit abgibt, die ihrerseits in Abhängigkeit von der gemessenen Temperatur die Menge der zugeführten Luft und/oder des zugeführten Brennstoffs regelt. Der Temperatursensor 7 lässt sich alternativ auch mit der Ausgangsseite der adiabaten Stufe 3 verbinden, um feststellen zu können, wie viel Luft bzw. Brennstoff der adiabaten Stufe 3 zugeführt werden muss, um eine vorgegebene gewünschte Ausgangstemperatur zu erzielen.

Da die adiabate Stufe 3 schnell auf eine sich ändernde Luft- bzw. Brennstoffzufuhr reagiert, eignet sich dieses System zu einer sehr dynamischen Anpassung an Temperaturschwankungen des den Verdampfer 2 verlassenden Gasstroms und somit zu einer sehr dynamischen Temperaturvergleichmäßigung vor dem Reformer 1.

Fig. 2 zeigt schließlich eine weitere Ausführungsform der erfindungsgemäßen Normalisierungsstufe, die in diesem Fall als katalytisch beheizter Reaktor 5 ausgebildet ist. Wiederum entsprechen die übrigen Komponenten des Gaserzeugungssystems denen der Figuren 1 und 2. Der katalytisch beheizte Reaktor 5 enthält eine Sekundärseite, in der ein Brennstoff zusammen mit Luft katalytisch umgesetzt wird. Die dabei erzeugte Wärme wird an die Primärseite abgegeben. Die Primärseite des katalytisch beheizten Reaktors 5 wird von den verdampften Komponenten durchströmt, die anschließend in den Reformer 1 eingeleitet werden. Es ist sinnvoll, wie in Fig. 3 dargestellt, eine Regelung der zugeführten Luft- und/oder Brennstoffmenge in Abhängigkeit von der Temperatur des den Reformer 1 zuzuführenden Gasstroms vorzunehmen. Hierzu ist ein Temperatursensor 10 vorgesehen, der mit einer Regeleinheit 9 verbunden ist, um dieser ein der gemessenen Temperatur entsprechendes Signal zuzuführen. Neben der der Sekundärseite des katalytisch beheizten Reaktors 5 zuzuführenden Brenngas- bzw. Luftmenge lässt sich mittels eines Ventils 8 auch der Sekundärseite des Verdampfers 2 eine geregelte Brenngas-/Luftmenge zuleiten. Hierzu ist es vorteilhaft, über eine weitere Leitung 11 beispielsweise Luft (oder Brenngas) in die Sekundärseite einzuleiten, während über die Leitung 12 beispielsweise Brenngas (oder Luft) zugeführt wird, das (oder die) temperaturabhängig geregelt der Sekundärseite des katalytischen Reaktors 5 und/oder des Verdampfers 2 zugeführt wird. Hierdurch lassen sich die Mengen der jeweils im Verdampfer 2 und im katalytischen Reaktor 5 umgesetzten Komponenten (Luft und Brenngas) und somit die dort entstehende Wärme optimal regeln. Insbesondere kann der Leitung 11 Kathodenabgas, der Leitung 12 Anodenabgas (oder umgekehrt) eines nachgeschalteten Brennstoffzellensystems zugeführt werden.

Der zusätzliche Regelaufwand bei dieser Ausführungsform kann insbesondere in Hinblick auf einer erhöhten Dynamik des Systems (bei hohen Lastschwankungen) gerechtfertigt sein.

Die vorliegende Erfindung bewirkt eine Vergleichmäßigung des Temperaturverlaufs des dem Reformer 1 zuzuführenden Gasstroms, wodurch sich die Lebensdauer des Reformerkatalysators deutlich erhöht. Gleichzeitig kann durch die Erfindung das dem Reformer zuzuführende Gasgemisch auf eine Temperatur knapp unterhalb der maximal zulässigen Eintrittstemperatur des Reformers eingestellt werden.

## Patentansprüche

1. Gaserzeugungssystem zur Bereitstellung eines einem Reformer (1) zuzuführenden Gasstroms, der zumindest eine Kohlenstoffverbindung, wie Kohlenwasserstoff oder Alkohol, und Wasserdampf enthält, wobei ein Verdampfer (2) zur Verdampfung wenigstens einer der dem Reformer (1) zuzuführenden Komponenten vorgesehen ist, wobei zwischen Verdampfer (2) und Reformer (1) eine Normalisierungsstufe zur Vergleichmäßigung der Temperaturverteilung im dem Reformer (1) zuzuführenden Gasstrom geschaltet ist,
**dadurch gekennzeichnet, dass**
die Normalisierungsstufe eine adiabate Stufe (3) ist, in der Brennstoff und Luft adiabatisch katalytisch umgesetzt werden, und dass zur Regelung der der adiabaten Stufe (3) zugeführten Luft- und/oder Brennstoffmenge ein Temperatursensor (7) vorgesehen ist, der am Eingang oder am Ausgang der adiabaten Stufe (3) angeordnet ist.

2. Gaserzeugungssystem zur Bereitstellung eines einem Reformer (1) zuzuführenden Gasstroms, der zumindest eine Kohlenstoffverbindung, wie Kohlenwasserstoff oder Alkohol, und Wasserdampf enthält, wobei ein Verdampfer (2) zur Verdampfung wenigstens einer der dem Reformer (1) zuzuführenden Komponenten vorgesehen ist, wobei zwischen Verdampfer, (2) und Reformer (1) eine Normalisierungsstufe zur Vergleichmäßigung der Temperaturverteilung im dem Reformer (1) zuzuführenden Gasstrom geschaltet ist,
**dadurch gekennzeichnet, dass**
die Normalisierungsstufe ein katalytisch beheizter Reaktor (5) ist, und dass zur Regelung der dem katalytisch beheizten Reaktor (5) zuzuführenden Luft- und/oder Brennstoffmenge ein Temperatursensor (10) vorgesehen ist, der mit einer Regeleinheit (9) in Verbindung steht, die ihrerseits ein Regelungsventil (8) in einer Zufuhrleitung für Luft und/oder Brennstoff ansteuert, wobei der Temperatursensor (10) an der Gasstromeinlassseite oder der Gasstromauslassseite des katalytisch beiheizten Reaktors (5) angeordnet sein kann.

3. Gaserzeugungssystem nach Anspruch 1 oder 2, mit einem aus mehreren Verdampferstufen bestehenden Verdampfer (2),
**dadurch gekennzeichnet, dass**
die Normalisierungsstufe (3; 5) hinter die letzte Verdampferstufe geschaltet ist.

4. Verfahren zur Bereitstellung eines einem Reformer (1) zuzuführenden Gasstroms, der zumindest eine Kohlenstoffverbindung, wie Kohlenwasserstoff oder Alkohol, und Wasserdampf enthält, wobei wenigstens eine der dem Reformer (1) zuführenden Komponenten durch Verdampfung erzeugt wird, wobei die Temperatur des dem Reformer (1) zuzuführenden Gasstroms vor dessen Einleitung in den Reformer (1) auf einen Temperaturbereich unterhalb der maximal zulässigen Reformereintrittstemperatur vergleichmäßigt wird,
**dadurch gekennzeichnet, dass**
zur Vergleichmäßigung der Temperatur des Gasstroms eine adiabate Stufe (3) verwendet wird, in der Brennstoff und Luft adiabatisch katalytisch ungesetzt werden, und dass die der adiabaten Stufe (3) zuzuführende Luft- und/oder Brennstoffmenge in Abhängigkeit von der Temperatur des Gasstroms geregelt wird.

5. Verfahren zur Bereitstellung eines einem Reformer (1) zuzuführenden Gasstroms, der zumindest eine Kohlenstoffverbindung, wie Kohlenwasserstoff oder Alkohol, und Wasserdampf enthält, wobei wenigstens eine der dem Reformer (1) zuführenden Komponenten durch Verdampfung erzeugt wird, wobei die Temperatur des dem Reformer (1) zuzuführenden Gasstroms vor dessen Einleitung in den Reformer (1) auf einen Temperaturbereich unterhalb der maximal zulässigen Reformereintrittstemperatur vergleichmäßigt wird,
**dadurch gekennzeichnet, dass**
zur Vergleichmäßigung der Temperatur des Gasstroms ein katalytisch beheizter Reaktor (5) verwendet wird, und dass die dem katalytisch beheizten Reaktor (5) zur Beheizung zuzuführende Luft- und/oder Brennstoffmenge in Abhängigkeit der Temperatur des Gasstroms geregelt wird.

6. Verfahren nach Anspruch 4 oder 5,
**dadurch gekennzeichnet, dass**
bei einer mehrstufigen Verdampfung die Vergleichmäßigung der Temperatur des Gasstroms hinter der letzten Verdampferstufe vorgenommen wird.

## Claims

1. Gas generation system for providing a flow of gas, which contains at least one carbon compound, such as a hydrocarbon or alcohol, and water vapour, and which is to be fed to a reformer (1), an evaporator (2) being provided for the evaporation of at least one of the components to be fed to the reformer (1), a normalizing stage being connected between the evaporator (2) and the reformer (1) for equalization of the temperature distribution in the gas flow to be fed to the reformer (1), **characterized in that** the normalizing stage is an adiabatic stage (3), in which the fuel and air are converted adiabatically and catalytically, and that a temperature sensor (7), which is arranged at the inlet to or at the outlet from the adiabatic stage (3), is provided for controlling the quantity of air and/or fuel fed to the adiabatic stage (3).

2. Gas generation system for providing a flow of gas, which contains at least one carbon compound, such as a hydrocarbon or alcohol, and water vapour, and which is to be fed to a reformer (1), an evaporator (2) being provided for the evaporation of at least one of the components to be fed to the reformer (1), a normalizing stage being connected between the evaporator (2) and the reformer (1) for equalization of the temperature distribution in the gas flow to be fed to the reformer (1), **characterized in that** the normalizing stage is a catalytically heated reactor (5), and that for controlling the quantity of air and/or fuel to be fed to the catalytically heated reactor (5) a temperature sensor (10) is provided, which is connected to a control unit (9), which in turn controls a control valve (8) in a feed line for air and/or fuel, it being possible to arrange the temperature sensor (10 on the gas flow inlet side or the gas flow outlet side of the catalytically heated reactor (5).

3. Gas generation system according to Claim 1 or 2, having an evaporator (2) comprising multiple evaporator stages, **characterized in that** the normalizing stage (3; 5) is connected downstream of the final evaporator stage.

4. Method for providing a flow of gas, which contains at least one carbon compound, such as a hydrocarbon or alcohol, and water vapour, and which is to be fed to a reformer (1), at least one of the components to be fed to the reformer (1) being produced by evaporation, the temperature of the gas flow to be fed to the reformer (1) prior to its introduction into the reformer (1) being equalized to a temperature range below the maximum admissible reformer inlet temperature, **characterized in that** for equalizing the temperature of the gas flow an adiabatic stage (3) is used, in which the fuel and air are converted adiabatically and catalytically, and that the quantity of air and/or fuel to be fed to the adiabatic stage (3) is controlled as a function of the temperature of the gas flow.

5. Method for providing a flow of gas, which contains at least one carbon compound, such as a hydrocarbon or alcohol, and water vapour, and which is to be fed to a reformer (1), at least one of the components to be fed to the reformer (1) being produced by evaporation, the temperature of the gas flow to be fed to the reformer (1) prior to its introduction into the reformer (1) being equalized to a temperature range below the maximum admissible reformer inlet temperature, **characterized in that** for equalizing the temperature of the gas flow a catalytically heated reactor (5) is used, and that the quantity of air and/or fuel to be fed to the catalytically heated reactor (5) is controlled as a function of the temperature of the gas flow.

6. Method according to Claim 4 or 5, **characterized in that** in the case of a multistage evaporation the equalization of the temperature of the gas flow is undertaken downstream of the final evaporator stage.

## Revendications

1. Système de génération de gaz pour préparer un flux de gaz destiné à alimenter un reformeur (1), lequel flux renferme au moins un composé carboné, comme par exemple un hydrocarbure ou un alcool, et de la vapeur d'eau, un évaporateur (2) pour vaporiser au moins un des composants destinés à alimenter le reformeur (1) étant prévu, un étage de normalisation pour équilibrer la plage de température dans le flux de gaz destiné à alimenter le reformeur (1) étant disposé entre l'évaporateur (2) et le reformeur (1), **caractérisé en ce que** l'étage de normalisation est un étage adiabatique (3), dans lequel un combustible et de l'air sont transformés catalytiquement adiabatiquement, et **en ce qu'**un capteur de température (7), lequel est disposé à l'entrée ou à la sortie de l'étage adiabatique (3), est prévu pour régler la quantité d'air et/ou de combustible d'alimentation de l'étage adiabatique (3).

2. Système de génération de gaz pour préparer un flux de gaz destiné à alimenter un reformeur (1), lequel flux renferme au moins un composé carboné, comme par exemple un hydrocarbure ou un alcool, et de la vapeur d'eau, un évaporateur (2) pour vaporiser au moins un des composants destinés à alimenter le reformeur (1) étant prévu, un étage de normalisation pour équilibrer la plage de température dans le flux de gaz destiné à alimenter le reformeur (1) étant disposé entre l'évaporateur (2) et le reformeur (1), **caractérisé en ce que** l'étage de normalisation est un réacteur (5) chauffé catalytiquement et **en ce qu'**un capteur de température (10) est prévu pour régler la quantité d'air et/ou de combustible d'alimentation du réacteur (5) chauffé catalytiquement, lequel capteur est relié à une unité de réglage (9), laquelle commande de son côté une soupape de réglage (8) dans une conduite d'alimentation en air et/ou combustible, le capteur de température (10) pouvant être disposé du côté entrée ou du côté sortie du flux de gaz du réacteur (5) chauffé catalytiquement.

3. Système de génération de gaz selon la revendication 1 ou 2, comportant un évaporateur (2) constitué de plusieurs étages d'évaporateur, **caractérisé en ce que** l'étage de normalisation (3; 5) est disposé en aval du dernier étage d'évaporateur.

4. Procédé pour préparer un flux de gaz destiné à alimenter un reformeur (1), lequel flux renferme au moins un composé carboné, comme par exemple un hydrocarbure ou un alcool, et de la vapeur d'eau, au moins un des composants d'alimentation du reformeur (1) étant généré par vaporisation, la température du flux de gaz destiné à alimenter le reformeur (1) étant équilibrée avant son introduction dans le reformeur (1) suivant une plage de température qui se situe au-dessous de la température maximale autorisée d'entrée dans le reformeur (1), **caractérisé en ce qu'**un étage adiabatique (3), dans lequel un combustible et de l'air sont transformés catalytiquement adiabatiquement, est utilisé pour équilibrer la température du flux de gaz et **en ce que** la quantité d'air et/ou de combustible d'alimentation de l'étage adiabatique (3) est réglée en fonction de la température du flux de gaz.

5. Procédé pour préparer un flux de gaz destiné à alimenter un reformeur (1), lequel flux renferme au moins un composé carboné, comme par exemple un hydrocarbure ou un alcool, et de la vapeur d'eau, au moins un des composants d'alimentation du reformeur (1) étant généré par vaporisation, la température du flux de gaz destiné à alimenter le reformeur (1) étant équilibrée avant son introduction dans le reformeur (1) suivant une plage de température qui se situe au-dessous de la température maximale autorisée d'entrée dans le reformeur (1), **caractérisé en ce qu'**un réacteur (5) chauffé catalytiquement est utilisé pour équilibrer la température du flux de gaz et **en ce que** la quantité d'air et/ou de combustible d'alimentation en vue du chauffage du réacteur (5) chauffé catalytiquement est réglée en fonction de la température du flux de gaz.

6. Procédé selon la revendication 4 ou 5,
**caractérisé en ce** l'équilibrage de la température du flux de gaz est opéré, lors d'une vaporisation à plusieurs étages, en aval du dernier étage d'évaporateur.
